# EUROPÄISCHE PATENTSCHRIFT

(11) **EP 1 223 427 B1**
(45) Veröffentlichungstag und Bekanntmachung des Hinweises auf die Patenterteilung: **02.08.2006**
(21) Anmeldenummer: 01129505.2
(22) Anmeldetag: 11.12.2001
(51) Int. Cl.: G01N 30/60, B01J 20/281

(54) **Trennsäule zum Untersuchen von Gasen**
Separation column for examination of gases
Colonne séparatrice pour l'examen des gaz

(30) Priorität: 10.01.2001 DE 10100921
(43) Veröffentlichungstag der Anmeldung: 17.07.2002
(73) Patentinhaber: ABB RESEARCH LTD., 8050 Zürich (CH)
(72) Erfinder: Binz, Dieter, Dr., 69493 Hirschberg (DE); Vogel, Albrecht, Dr., 76297 Stutensee (DE); Barsch, Erwin, 68526 Ladenburg (DE); Schmidt, Christian J., Dr., 69115 Heidelberg (DE)
(74) Vertreter: Miller, Toivo

(56) Entgegenhaltungen:
- WO-A-94/12432
- US-A- 3 522 172
- US-A- 4 951 503
- FORGACS E ET AL: "RETENTION STRENGTH AND SELECTIVITY OF POROUS GRAPHITIZED CARBON COLUMNS THEORETICAL ASPECTS AND PRACTICAL APPLICATIONS" TRAC, TRENDS IN ANALYTICAL CHEMISTRY, ANALYTICAL CHEMISTRY. CAMBRIDGE, GB, Bd. 14, Nr. 1, 1995, Seiten 23-29, XP000485510 ISSN: 0165-9936

## Beschreibung

Die Erfindung betrifft eine Trennsäule zum Untersuchen von Gasen gemäß dem Oberbegriff des Patentanspruchs 1.

Eine solche Vorrichtung findet beispielsweise bei der Analyse von Erdgas und dessen Brennwertbestimmung eine Anwendung.

Es ist bereits eine Trennsäule bekannt, die als Kapillare ausgebildet ist. Sie ist mit einem Trägermaterial in Form von Kugeln gefüllt, die aus Kohlenstoff gefertigt sind, und einen Durchmesser von 150 bis 200µm aufweisen. Die Trennsäule hat einen Durchmesser von einigen Millimetern. Ihre Länge beträgt mehrere Meter. Mit dieser Trennsäule lassen sich die im Erdgas enthaltenen Inertgase von den brennwertbehafteten Anteilen trennen, so dass eine Brennwertbestimmung des zu untersuchenden Gases möglich ist. Für die Durchführung der Messung sind fünf Minuten erforderlich, während derer etwa 15 ml Trägergas pro Sekunde durch die Trennsäule gespült werden muß.

Auch aus der US 3 522 172 ist eine Trennsäule bekannt, die als Kapillare ausgebildet ist und mit einem kugelförmigen Trennmaterial aus Kohlenstoff befüllt ist. Der Kapillar-Durchmesser beträgt dabei zwischen 200µm und 1,000µm, vorzugsweise 500µm. Der Durchmesser des kugelförmigen Trennmaterials beträgt zwischen 2/3 und 1/5 des jeweiligen Kapillar-Durchmessers. Auch ihre Länge beträgt dabei mehrere Meter. Diese Trennsäule wird beispielsweise in der Petrochemie und bei der Öl- oder Gaserzeugung eingesetzt.

In der Mikrotechnik werden mehr und mehr Trennsäulen benötigt, um eine schnelle Untersuchung von Gasen durchzuführen. Die oben beschriebene Trennsäule ist viel zu groß dimensioniert, um dort eine Anwendung zu finden. Für die Untersuchung eines Gases wird zudem zu viel Zeit benötigt. Für Vorrichtungen, deren Abmessungen im Millimeterbereich liegen, und für die eine passende Trennsäule benötigt wird, ist zudem eine Bevorratung von größeren Mengen an Trägergas für jede Untersuchung nicht möglich.

Der Erfindung liegt die Aufgabe zugrunde, eine Trennsäule aufzeigen, deren Abmessungen nur so groß sind, dass sie in jede Vorrichtung der Mikrotechnik integriert werden kann, und zudem in der Lage ist, Erdgas in alle Bestandteile einzeln aufzuspalten, so dass daraus dessen Brennwert bestimmt werden kann.

Diese Aufgabe wird durch die Merkmale des Patentanspruchs 1 gelöst.

Die erfindungsgemäße Trennsäule ist als dünne Kapillare ausgebildet. Sie hat eine Länge von etwa 30 mm und einen Innendurchmesser von 150 bis 200µm. Sie ist mit einem Trennmaterial aus Kohlenstoff gefüllt. Der Kohlenstoff liegt in Form von Kugeln vor, die einen Durchmesser zwischen 150µm und 180µm aufweisen. Wird der Durchmesser der Kugeln größer gewählt, so wird der Abstand zwischen dem Innendurchmesser der Kapillare und den Kugeln zu gering. Die Trennsäule wird dann sehr empfindlich gegenüber Biegespannungen und kann brechen. Um eine vollständige Aufspaltung von Erdgas in alle seine Bestandteile zu erreichen, müssen die Kugeln aus Kohlenstoff in einer ganz bestimmten Form innerhalb der Kapillare angeordnet werden. Eine optimale Funktion der erfindungsgemäßen Trennsäule wird dann erreicht, wenn alle Kugeln hintereinander aufgereiht sind, so dass keine Kugeln nebeneinander liegen, sondern jede Kugel einzeln entlang der Achse der Kappillare angeordnet ist. Mit diesem Aufbau wird erreicht, dass das Erdgas in die Bestandteile Methan, Kohlendioxid, Stickstoff, Helium, Schwefelwasserstoff und Arsenverbindungen sowie höhere molekulare Kohlenwasserstoffe wie Ethan, Propan, Isobutan, Butan und Hexan aufgespalten wird, so fern diese auch alle darin enthalten sind.

Damit die Kugeln dauerhaft in der Kapillare gehalten werden, ist an beiden Enden der Kapillare jeweils ein Verschluss vorgesehen, der gasdurchlässig ist. Vorzugsweise wird jeder der Verschlüsse durch eine Kapillare gebildet, deren Innendurchmesser kleiner als der Durchmesser der Kugeln ist, und deren eines Ende in das Ende der Trennsäule gesteckt und damit gasdicht verbunden ist. Vorzugsweise wird für die Verbindung der Verschlüsse mit der Trennsäule ein Kleber in Form von Epoxidharz verwendet. Da die beiden Verschlüsse an den Enden der Trennsäule als Kapillare ausgebildet sind, ist es möglich, das zu untersuchende Gas und auch das Trägergas ohne Schwierigkeiten in die Trennsäule einzuleiten. Zudem können die Komponenten bzw. Eluenten, in welche das zu untersuchende Gas in der Trennsäule aufgespalten wird, so wie das Trägergas ungehindert am zweiten Ende der Trennsäule austreten.

Die maximale Trennleistung der Trennsäule d.h. ihre höchste Bodenzahl wird bei einem Fluß von etwa 5 µl/sec erreicht, wenn Wasserstoff als Trägergas verwendet wird. Eine Auftrennung von Erdgas in die Bestandteile CO₂, Methan und Luft erfolgt in weniger als 16 sec, wenn in dieser Zeit die Temperatur von 0°C auf etwa 50°C erhöht wird.

Der Flußbereich hoher Bodenzahl kann nach unten hin weit vergrößert werden, wenn zwischen die einzelnen Kugeln aus Kohlenstoff ein inertes Pulver in Form Buckminister Fulleren C₆₀ gestopft wird. An Stelle dieses Pulvers kann auch ein Pulver aus Kohlenstoff verwendet werden, das auch zur Herstellung der oben beschriebenen Kugeln verwendet wird. Ebenso ist auch ein Pulver aus Carbosphere Kohlenstoff hierfür geeignet.

Ein solcher Zusatz reduziert den Durchfluß innerhalb der Trennsäule. Soll jedoch die Strömungsgeschwindigkeit entlang der aktiven Oberflächen der Trennsäule, die mit Kugeln und einem inerten Pulver gefüllt ist, zur Erhaltung der maximalen Bodenzahl die gleiche bleiben, so ist der gesamte Durchfluß der Kapillare zu reduzieren.

Durch das inerte Pulver, das zwischen die Kugeln aus Kohlenstoff gestopft ist, sind viele verschiedene Wege durch die Trennsäule an den Kugeln vorbei möglich. Die Bodenzahl wird durch diese Maßnahmen in weiten Bereichen von dem gesamten Durchfluss durch die Trennsäule bzw. dem Vordruck des Trägergases über fast eine Größenordnung unabhängig. Damit ergibt sich für die erfindungsgemäße Trennsäule die Möglichkeit, den Durchfluß unter Beibehaltung der Bodenzahl nach anderen, unabhängigen Kriterien einzustellen. Ein solches Kriterium kann beispielsweise ein bestimmter Durchfluß sein, den eine zusätzliche Trennsäule oder ein anderes Bauelement benötigt, die oder welches der erfindungsgemäßen Trennsäule vorgeschaltet ist.

Wie oben erwähnt, ist die erfindungsgemäße Trennsäule für die Anwendung in der Mikrosystemtechnik vorgesehen. Die Trennsäule kann deshalb auch direkt in einem Trägerelement auszubilden, mit dem eine Vielzahl von Bauelementen der Mikrosystemtechnik zu einer Baueinheit zusammen gefasst werden können. Solche Trägerelemente sind mit einer Platte und einem Deckel aus Glas oder Silizium versehen. Der Deckel grenzt die Oberfläche der Platte nach außen zu gasdicht ab. Für die Trennsäule wird in der Oberfläche der Platte ein Kanal ausgebildet. Der Kanal ist mit Aufweitungen versehen, deren Durchmesser geringfügig größer sind als die Durchmesser der Kugeln aus Kohlenstoff. In jeder Aufweitung des Kanals wird anschließend eine Kugel aus Kohlenstoff angeordnet. Der Kanal ist vor und hinter jeder Aufweitung auf einen Durchmesser verjüngt, der nicht größer als die Einlassöffnung des Kanals ist. Damit wird erreicht, dass die in den Aufweitungen angeordneten Kugeln gehalten werden. Der Durchmesser des Kanals ist im Bereich der Aufweitungen nicht größer als der Innendurchmesser der oben beschriebenen Kapillare. Der Kanal hat auch die Länge der Kapillare. Nach dem die Kugeln in dem Kanal angeordnet sind, wird der Deckel so mit der Oberfläche der Platte verbunden, dass der Kanal gasdicht verschlossen ist.

Es ist auch möglich, den Kanal teilweise in dem Deckel und der Oberfläche der Platte auszubilden. Der Deckel wird dann an den Stellen, an den jeweils eine Kugel im Kanal anzuordnen ist, ebenfalls mit einer tieferen Ausnehmung versehen, wobei der Kanal auch hierbei vor und hinter jeder Aufweitung verjüngt ist. Somit kann auch auf diese Weise eine Trennsäule gebildet, wie oben beschreiben. Die teilweise Ausbildung der Trennsäule im Deckel und der Platte hat den Vorteil, dass die Ausnehmungen weder im Deckel noch in der Platte so tief ausgebildet werden müssen, wie das der Fall ist, wenn die Trennsäule nur in der Oberfläche der Platte ausgebildet wird. Damit können der Deckel und die Platte dünner ausgebildet werden. Das erste Ende der Trennsäule, ist so weit offen, dass ein zu untersuchendes Gas und ein Trägergas in den Kanal eingeleitet werden können. Das zweite Ende des Kanals kann an einen Detektor angeschlossen werden, der ebenfalls in einer Ausnehmung der Platte angeordnet werden kann.

Weitere erfinderische Merkmale sind in den abhängigen Ansprüchen gekennzeichnet.

Die Erfindung wird nachfolgend an Hand von schematischen Zeichnungen näher erläutert.

Es zeigen:
- Fig. 1: eine erfindungsgemäße Trennsäule ,
- Fig. 2: eine Variante der in Fig. dargestellten Trennsäule,
- Fig. 3: ein Trennsäule, die in ein Trägerelement intgriert ist.

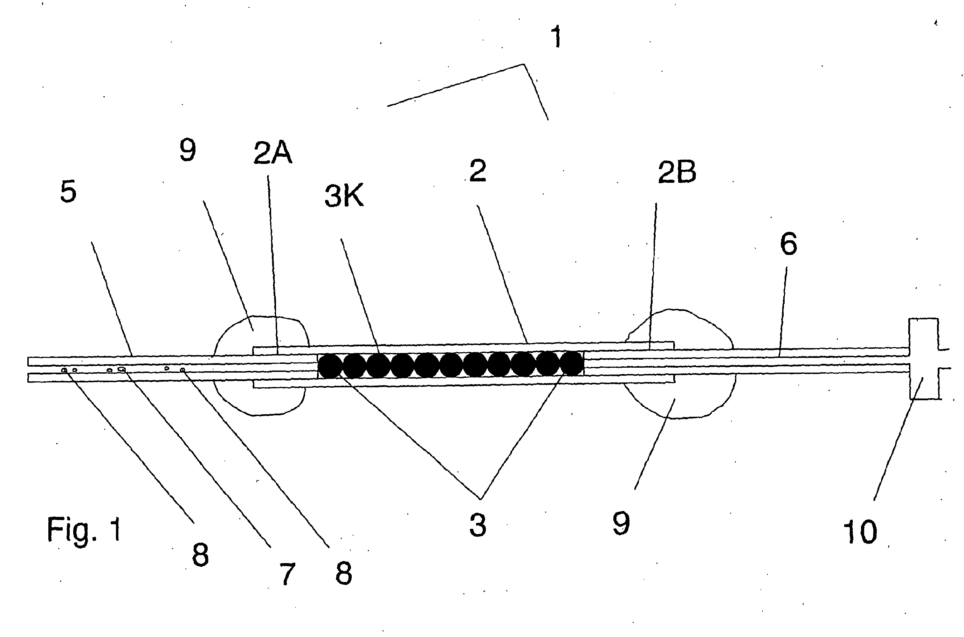

Die in Fig. 1 dargestellte Trennsäule 1 besteht im wesentlichen aus einer Kapillare 2, Trennmaterial 3 und zwei gasdurchlässigen Verschlüssen 5 und 6. Die Kapillare 2 bildet den Kern der Trennsäule 2. Sie ist aus Quarzglas, das mit Polyimid beschichtet ist, gefertigt. Ihre Länge beträgt bei dem hier dargestellten Ausführungsbeispiel 30mm. Zudem hat sie einen Innendurchmesser von 200µm. Im Inneren der Kapillare 2 ist das Trennmaterial 3 angeordnet. Es handelt sich dabei um Teilchen 3K, die als Kugeln ausgebildet sind. Die Kugeln 3K haben einen Durchmesser, der 150µm bis 200µm beträgt. Bevorzugt wird der Durchmesser etwas kleiner als 200µm gewählt, da sonst eine zu große Biegespannung auf die Trennsäule 1 wirkt, und diese deshalb brechen kann. Die Kugeln 3K sind aus Kohlenstoff, oder Carbosphere Kohlenstoff gefertigt. Sie sind so in der Kapillare 2 angeordnet, dass alle Kugeln 3K hintereinander angeordnet sind, so dass ihre Mittelpunkte etwa in der Längsachse der Trennsäule 1 liegen. Die Kapillare 2 ist an beiden Enden 2A und 2B mit je einem Verschluss 5 und 6 versehen. Beide Verschlüsse 5 und 6 haben die gleichen Abmessungen und sind als Kapillaren ausgebildet. Die Abmessungen der Kapillaren 5 und 6 sind so gewählt, dass ihr Außendurchmesser dem Innendurchmesser der Kapillare 2 entsprechen oder geringfügig kleiner ist. Der Innendurchmesser der Kapillaren 5 und 6 ist so bemessen, dass er in jedem Fall etwas kleiner ist als der Außendurchmesser der Kugeln 3K ist. Jeweils ein Ende der Kapillaren 5 und 6 ist in Ende 2A, 2B der Kapillare 2 gesteckt. Zusätzlich sind beide Kapillaren 5 und 6 mit der Kapillare 2 dauerhaft und gasdicht verbunden. Vorzugsweise sind sie an den Enden 2A und 2B mit einem Kleber 9 auf der Basis von Epoxidharz befestigt. Mit Hilfe dieser beiden Verschlüsse 5 und 6 ist es möglich, ein Trägergas 7 und ein Probengas 8, beispielsweise Erdgas, in die Kapillare 2 einzuleiten. Gleichzeitig wird sichergestellt, dass das Trägergas 7 und die Komponenten des Erdgases 8, die mit Hilfe des Trennmaterials 3 abgespalten werden, die Kapillare 2 auch verlassen, ohne dass dabei die Kugeln 3 heraus gespült werden. An das zweite Ende 2B der Trennsäule 2 ist bei dem hier dargestellten Ausführungsbeispiel ein Detektor 10 angeschlossen. Auf Grund der zeitlichen Reihenfolge, mit der die Komponenten des Probengases 8 die Trennsäule 1 verlassen, kann festgestellt werden, welche Komponenten das zu untersuchende Probengas aufweist. Durch jede Komponente des Probengases wird der elektrische Widerstand eines Drahts verändert, der im Innern des Detektors angeordnet ist. Die Größe dieser Änderung hängt davon ab, wie groß der Anteil einer jeden Komponente an der Gesamtmenge des zu untersuchenden Gases ist. Hieraus kann dann beispielsweise der Brennwert des untersuchten Erdgases 8 bestimmt werden.

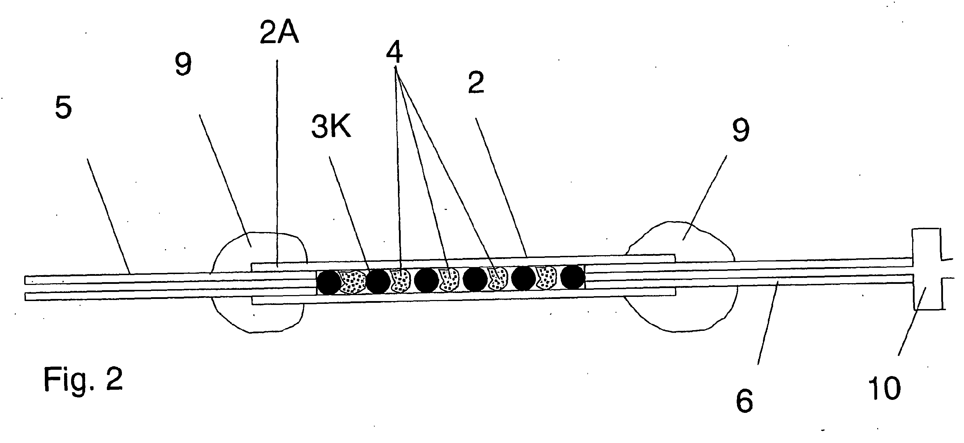

Die in Fig. 2 dargestellte Ausführungsform der erfindungsgemäßen Trennsäule 1 unterscheidet sind von der in Fig. 1 dargestellten und in der zugehörigen Beschreibung erläuterten Trennsäule 1 nur darin, dass in die Kapillare 2 neben den Kugeln 3K zusätzlich ein inertes Pulver 4 gestopft ist. Gleiche Bauteile sind deshalb mit gleichen Bezugszeichen versehen. Das inerte Pulver 4 ist zwischen jeweils zwei aufeinander folgenden Kugeln 3K angeordnet. Das Pulver kann aus Buckminister Fulleren C₆₀ bestehen. An Stelle dieses Pulvers kann auch ein Pulver aus Kohlenstoff verwendet werden, das zur Herstellung der oben beschriebenen Kugeln verwendet wird.

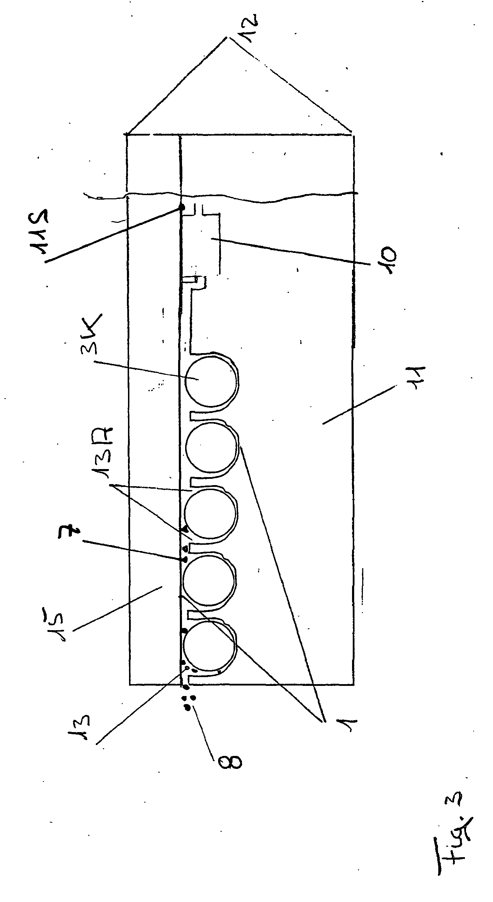

Wie Fig. 3 zeigt kann die Trennsäule 1 auch direkt innerhalb eines Trägerelements ausgebildet werden, in welches noch weitere Bauelemente der Mikrosystemtechnik intgriert werden können. Hierfür wird in die Oberfläche 11S einer Platte 11, die Bestandteil des Trägerelements 12 ist, ein Kanal 13 mit einer Länge von beispielsweise 30mm ausgebildet. An den Stellen, an denen im Kanal 13 eine Kugel 3K aus Kohlenstoff angeordnet werden soll, ist eine Aufweitung 13A ausgebildet. Der Durchmesser einer jeden Aufweitung 13A ist geringfügig größer als der Durchmesser der Kugeln 3K, so dass ein Trägergas 7 und ein Probengas 8 um und an der Kugel 3K vorbei strömen kann. Der Kanal 13 ist vor und hinter jeder Aufweitung 13 so weit verjüngt, dass das Trägergas 7 und das Probengas 8 hindurch strömen können. Durch das Verengen des Kanals 13 vor und hinter den Aufweitungen 13A wird erreicht, dass die Kugeln 3K in der einmal vorgegeben Position gehalten werden. In jede Aufweitung 13A des Kanals 13 wird eine Kugel 3K aus Kohlenstoff angeordnet. Anschließend wird auf der Oberfläche11S der Platte 11 ein Deckel 15 aus Glas oder Silizium angeordnet, der so mit der Platte 11 verbunden wird, dass die gesamte Oberfläche 11 S der Platte 11 gasdicht verschlossen ist. Das erste Ende der Trennsäule 1, ist so weit offen, dass das Trägergas 7 und das Probengas 8 eingeleitet werden können. Das zweite Ende der Trennsäule 1 ist an einen Detektor 10 angeschlossen, der ebenfalls in einer Ausnehmung der Platte 11 angeordnet ist. Mit dessen Hilfe kann die Auswertung des zu untersuchenden Probengases 8, bei dem es sich beispielsweise um Erdgas handelt, durchgeführt werden kann.

Es ist auch möglich, den Kanal 13 teilweise in der Oberfläche 11S der Platte 11 und im Deckel 15 auszubilden (hier nicht dargestellt). Die Platte 11 und der Deckel 15 werden dann an den Stellen, an denen jeweils eine Kugel 3K anzuordnen ist, mit einer tieferen Ausnehmung versehen. Nach dem gasdichten Verbinden des Deckels15 mit der Platte 11 hat eine so ausgebildete Trennsäule die gleichen Eigenschaften wie eine solche, die nur in der Oberfläche der Platte 11 ausgebildete ist. Auch diese Trennsäule weist die gleichen Abmessungen auf.

## Patentansprüche

1. Trennsäule für den Einsatz in der Mikrotechnik zum Untersuchen von Gasen, mit einer Kapillare (2), in welche ein Trennmaterial (3) gefüllt ist, wobei das Trennmaterial (3) in Form von Kugeln (3K) ausgebildet ist, die alle den gleichen Durchmesser aufweisen,
**dadurch gekennzeichnet, daß**
die Durchmesser der Kugeln (3K) geringfügig kleiner bemessen sind als der Innendurchmesser der Kapillare (2), die einen Innendurchmesser von 150 bis 200 µm hat.

2. Trennsäule nach Anspruch 1, **dadurch gekennzeichnet, dass** die Kugeln (3K) aus Kohlenstoff oder aus Carbosphere Kohlenstoff gefertigt sind.

3. Trennsäule nach einem der Ansprüche 1 oder 2, **dadurch gekennzeichnet, dass** die Kapillare (2) einen Innendurchmesser von 200µm aufweist, und dass der Durchmesser der Kugeln (3K) 150µm bis 200µm beträgt.

4. Trennsäule nach einem der Ansprüche 1 bis 3, **dadurch gekennzeichnet, dass** die Kugeln (3K) so innerhalb der Kapillare (2) angeordnet sind, dass alle Mittelpunkte der Kugeln (3K) auf einer Geraden angeordnet sind.

5. Trennsäule nach einem der Ansprüche 1 bis 4, **dadurch gekennzeichnet, dass** zwischen den Kugeln (3K) wenigstens bereichsweise ein inertes Pulver (4) angeordnet ist.

6. Trennsäule nach einem der Ansprüche 1 bis 5, **dadurch gekennzeichnet, dass** das inerte Pulver (4) aus Kohlenstoff, Buckminister Fulleren C₆₀ oder Carbosphere Kohlenstoff gefertigt ist.

7. Trennsäule nach einem der Ansprüche 1 bis 6, **dadurch gekennzeichnet, dass** die Kapillare (2) an beiden Enden mit je einem gasdurchlässigen Verschluss (5, 6) versehen ist.

8. Trennsäule nach einem der Ansprüche 1 bis 7, **dadurch gekennzeichnet, dass** beide Verschlüsse (5, 6) als Kapillaren ausgebildet sind, deren Außendurchmesser an den Innendurchmesser der Kapillare (2) angepasst sind, dass die ersten Enden einer jeden Kapillare (5, 6) in die ersten Enden (2A, 2B) der Kapillare (2) gesteckt und gasdicht sowie dauerhaft damit verbunden sind, und dass die Innendurchmesser der Kapillaren (5, 6) geringfügig kleiner als die Durchmesser der Kugeln (3K) ausgebildet sind.

9. Trennsäule nach Anspruch 1, **dadurch gekennzeichnet, dass** sie einen in der Oberfläche (11S) der Platte (11) eines Trägerelements (12) ausgebildeten Kanal (13) umfasst, dass der Kanal (13) zur Aufnahme von Kugeln (3K) aus Kohlenstoff mit Aufweitungen (13A) versehen und vor und hinter jeder Aufweitung (13A) verjüngt ist, dass der Kanal (13) mit einem Deckel (15) nach außen gasdicht verschlossen ist, der ebenso wie die Platte (11) aus Glas oder Silizium gefertigt ist, und dass das erste Ende des Kanals (13) als Einlassöffnung für ein Trägergas (7) und ein Probengas (8) vorgesehen ist.

10. Trennsäule nach Anspruch 1, **dadurch gekennzeichnet, dass** sie einen teilweise in der Oberfläche (11S) der Platte (11) und dem Deckel (15) eines Trägerelements (12) ausgebildeten Kanal (13) umfasst, dass der Kanal (13) zur Aufnahme von Kugeln (3K) aus Kohlenstoff mit Aufweitungen (13A) versehen und vor und hinter jeder Aufweitung (13) verjüngt ist, dass der Kanal (13) mit einem Deckel (15) nach außen gasdicht verschlossen ist, der ebenso wie die Platte (11) aus Glas oder Silizium gefertigt ist, und dass das erste Ende des Kanals (13) als Einlassöffnung für ein Trägergas 7 und ein Probengas 8 vorgesehen ist.

## Claims

1. Separation column for use in microtechnology for examination of gases, having a capillary (2) which is filled with a separation material (3), the separation material (3) being designed in the form of balls (3K) which all have the same diameter, **characterized in that** the diameters of the balls (3K) are dimensioned to be slightly smaller than the inside diameter of the capillary (2), which has an inside diameter of 150 µm to 200 µm.

2. Separation column according to Claim 1, **characterized in that** the balls (3K) are produced from carbon or Carbosphere carbon.

3. Separation column according to either of Claims 1 and 2, **characterized in that** the capillary (2) has an inside diameter of 200 µm, and **in that** the diameter of the balls (3K) is 150 µm to 200 µm.

4. Separation column according to one of Claims 1 to 3, **characterized in that** the balls (3K) are arranged inside the capillary (2) in such a way that the centre points of all the balls (3K) are arranged on a straight line.

5. Separation column according to one of Claims 1 to 4, **characterized in that** a powder (4) is arranged between the balls (3K) at least in certain regions.

6. Separation column according to one of Claims 1 to 5, **characterized in that** the inert powder (4) is produced from carbon, Buckminster Fullerene C₆₀ or Carbosphere carbon.

7. Separation column according to one of Claims 1 to 6, **characterized in that** the capillary (2) is provided with a respective gas-permeable seal (5, 6) at both ends.

8. Separation column according to one of Claims 1 to 7, **characterized in that** both seals (5, 6) are designed as capillaries, the outside diameters of which are adapted to the inside diameters of the capillary (2), **in that** the first ends of each capillary (5, 6) are inserted into the first ends (2A, 2B) of the capillary (2) and are permanently connected thereto in a gas-tight manner, and **in that** the inside diameters of the capillaries (5, 6) are designed to be slightly smaller than the diameters of the balls (3K).

9. Separation column according to Claim 1, **characterized in that** it comprises a channel (13) formed in the surface (11S) of the plate (11) of a support element (12), **in that** the channel (13) is provided with widened portions (13A) for accommodating carbon balls (3K) and is narrowed in front of and behind each widened portion (13A), **in that** the channel (13) is closed to the outside in a gas-tight manner by means of a lid (15), which is produced from glass or silicon, as is the plate (11), and **in that** the first end of the channel (13) is provided as an inlet opening for a carrier gas (7) and a sample gas (8).

10. Separation column according to Claim 1, **characterized in that** it comprises a channel (13) formed partly in the surface (11S) of the plate (11) and partly in the lid (15) of a support element (12), **in that** the channel (13) is provided with widened portions (13A) for accommodating carbon balls (3K) and is narrowed in front of and behind each widened portion (13A), **in that** the channel (13) is closed to the outside in a gas-tight manner by means of a lid (15), which is produced from glass or silicon, as is the plate (11), and **in that** the first end of the channel (13) is provided as an inlet opening for a carrier gas (7) and a sample gas (8).

## Revendications

1. Colonne séparatrice destinée à être utilisée en microtechnique pour l'examen de gaz, comportant un capillaire (2) rempli d'un matériau de séparation (3) sous la forme de billes (3K) ayant toutes le même diamètre, **caractérisée en ce que** le diamètre des billes (3K) est un peu inférieur au diamètre interne du capillaire (2) qui est de 150 à 200 µm.

2. Colonne séparatrice selon la revendication 1, **caractérisée en ce que** les billes (3K) sont fabriquées en carbone ou en carbone Carbosphère.

3. Colonne séparatrice selon la revendication 1 ou 2, **caractérisée en ce que** le capillaire (2) présente un diamètre interne de 200 µm, et que le diamètre des billes (3K) est de 150 à 200 µm.

4. Colonne séparatrice selon une des revendications 1 à 3, **caractérisée en ce que** les billes (3K) sont disposées à l'intérieur du capillaire (2) de manière que tous les centres des billes (3K) sont sur une droite.

5. Colonne séparatrice selon une des revendications 1 à 4, **caractérisée en ce qu'**une poudre inerte (4) est disposée au moins localement entre les billes (3K).

6. Colonne séparatrice selon une des revendications 1 à 5, **caractérisée en ce que** la poudre inerte (4) est constituée de carbone, de Buckminister Fulleren C 60 ou de carbone Carbosphère.

7. Colonne séparatrice selon une des revendications 1 à 6, **caractérisée en ce que** le capillaire (2) est équipé à chacune de ses extrémités d'un obturateur (5, 6) perméable aux gaz.

8. Colonne séparatrice selon une des revendications 1 à 7, **caractérisée en ce que**
- les deux obturateurs (5, 6) sont des capillaires dont le diamètre externe est adapté au diamètre interne du capillaire (2),
- les premières extrémités de chaque capillaire (5, 6) sont emmanchées dans les premières extrémités (2A, 2B) du capillaire (2) en leur étant reliées avec étanchéité aux gaz et durablement,
- les diamètres internes des capillaires (5, 6) sont un peu inférieurs au diamètre des billes (3K).

9. Colonne séparatrice selon la revendication 1, **caractérisée en ce que**
- elle comprend un canal (13) réalisé à la surface (11S) de la plaque (11) d'un élément porteur,
- le canal (13) présente des élargissements (13A) pour accueillir des billes (3K) en carbone et il est rétréci en amont et en aval de chaque élargissement (13A),
- le canal (13) est obturé avec étanchéité aux gaz vers l'extérieur par un couvercle (15) qui, comme la plaque (11), est réalisé en verre ou en silicium,
- la première extrémité du canal (13) est prévue pour constituer l'ouverture d'entrée d'un gaz porteur (7) et d'un gaz d'examen (8).

10. Colonne séparatrice selon la revendication 1, **caractérisée en ce que**
- elle comprend un canal (13) réalisé en partie à la surface (11 S) de la plaque (11) et dans le couvercle (15) d'un élément porteur (12),
- le canal (13) présente des élargissements (13A) pour accueillir des billes (3K) en carbone et il est rétréci en amont et en aval de chaque élargissement (13A),
- le canal (13) est obturé avec étanchéité aux gaz vers l'extérieur par un couvercle (15) qui, comme la plaque (11), est réalisé en verre ou en silicium,
- la première extrémité du canal (13) est prévue pour constituer l'ouverture d'entrée d'un gaz porteur (7) et d'un gaz d'examen (8).
